# EUROPÄISCHE PATENTSCHRIFT

(11) **EP 2 718 575 B1**
(45) Veröffentlichungstag und Bekanntmachung des Hinweises auf die Patenterteilung: **25.03.2015**
(21) Anmeldenummer: 12751442.0
(22) Anmeldetag: 14.05.2012
(51) Int. Cl.: F16B 37/04

(54) **SELBSTZENTRIERENDE KÄFIGMUTTER**
SELF-CENTRING CAGE NUT
ÉCROU PRISONNIER À AUTOCENTRAGE

(30) Priorität: 11.06.2011 DE 202011101724 U
(43) Veröffentlichungstag der Anmeldung: 16.04.2014
(73) Patentinhaber: Ruia Global Fasteners AG, 41462 Neuss (DE)
(72) Erfinder: DAMM, Arnold, 74592 Kirchberg/Jagst (DE)
(74) Vertreter: Weickmann & Weickmann
(86) Internationale Anmeldenummer: PCT/DE2012/200032
(87) Internationale Veröffentlichungsnummer: WO 2012/171526

(56) Entgegenhaltungen:
- US-A1- 2004 109 739
- US-A1- 2007 223 994

## Beschreibung

### Technisches Gebiet

Die vorliegende Erfindung betrifft eine Käfigmutter mit einem Mutternkörper, der in einem Käfig aufgenommen ist, bei der der Mutternkörper einen zylindrischen Ansatz und ein verbreitertes Halteelement umfasst, und der zylindrische Ansatz ein Innengewinde trägt, und sich durch eine Öffnung in dem Käfig nach außen erstreckt, wobei der Innendurchmesser der Öffnung wesentlich größer als der Außendurchmesser des zylindrischen Ansatzes (der Mutter) aber kleiner als das Außenabmaß des Halteelementes (Flansch der Mutter) ist. Die vorliegende Erfindung betrifft insbesondere eine Käfigmutter mit den Merkmalen des Oberbegriffs des Anspruchs 1. Eine solche Käfigmutter ist aus der US 2004/109 739 A1 bekannt.

### Stand der Technik

Solche Käfigmuttern erfreuen sich in der Industrie zunehmender Beliebtheit. Sie weisen jedoch zwei grundsätzliche Probleme auf:

Der Sinn solcher Käfigmuttern besteht darin, Montagetoleranzen auszugleichen, die zwischen den zu montierenden Bauteilen, wie einen Motor oder Sitzen eines Kraftfahrzeuges, und den Befestigungsstellen in der Karosserie vorkommen. Zu diesem Zweck weist der Mutternkörper im Käfig ein ausreichendes Spiel auf. Dadurch besteht zum einen die Gefahr, dass der Mutternkörper im Käfig eine Kippbewegung gegen die axiale Ausrichtung der Schraube ausführen kann. Dadurch kann das Eindrehen der Schraube in das Innengewinde im Mutternkörper erschwert werden.

Des weiteren verursachen die Käfigmuttern gemäß dem Stand der Technik störende Klappergeräusche zwischen Mutternkörper und Käfig, wenn an einem Bauteil zusätzliche Käfigmuttern für verschiedene Ausführungen eines Fahrzeuges vorgesehen sind, und diese aber bei bestimmten Ausführungen nicht benutzt werden. Die unbenutzten Käfigmuttern, die vorgesehen wurden, um den Montagebedarf verschiedener unterschiedlicher Bauteilvarianten nachzukommen, sind nämlich in ihrem Käfig relativ frei beweglich und können dadurch störende Klappergeräusche verursachen.

Des Weiteren sind die Mutternkörper der Käfigmuttern gemäß dem Stand der Technik in ihren Käfigen frei beweglich, solange noch keine Schraube eingedreht ist. Dies bedeutet aber, dass abhängig von der Lage des Käfigs bei der Montage der Mutternkörper zur Seite gerutscht sein kann, und es dann schwierig wird, mit der Schraube beziehungsweise dem Schraubenbolzen das Innengewinde im Mutternkörper zu treffen.

### Darstellung der Erfindung

Aufgabe der vorliegenden Erfindung ist es daher, eine Käfigmutter zu schaffen, die auch im unbenutzten Zustand keine Klappergeräusche verursacht und gleichzeitig sicherstellt, dass der Mutternkörper unabhängig von der Einbaulage stets zentriert ist, trotzdem aber im erforderlichen Umfang beweglich ist, um Montagetoleranzen auszugleichen. Erfindungsgemäß wird diese Aufgabe dadurch gelöst, dass zwischen dem Mutternkörper und dem Käfig ein Distanzelement angeordnet ist, welches mindestens ein senkrecht zu der Axialrichtung des Innengewindes wirksames Federelement umfasst, und der Mutternkörper gegenüber dem Käfig gegen die Federkraft des Federelements beweglich ist.

Zur Verbesserung der Stabilität ist es dabei besonders bevorzugt, wenn mindestens zwei einander gegenüberliegende Federelemente vorgesehen sind.

Zur Verbesserung des Schutzes vor Klappergeräusche ist es besonders bevorzugt, wenn die Federelemente in Axialrichtung des Innengewindes erheblich steifer ausgebildet sind als senkrecht zu dieser Axialrichtung. Der Spielraum, der zur Verfügung steht, bis es zum Anschlagen des Mutternkörpers am Käfig, und damit zu den unerwünschten Klappergeräuschen kommt, ist nämlich in Axialrichtung des Innengewindes erheblich geringer als senkrecht dazu, wo ein großes Spiel zum Ausgleich der Fertigungstoleranzen vorgesehen sein muss.

Besonders bevorzugt ist das Distanzelement aus zwei koaxial ineinander angeordneten Ringen aufgebaut, die durch das oder die Federelemente verbunden sind, wobei der innere Ring den Mutternkörper umschließt und der äußere Ring sich an dem Käfig abstützt. Auf diese Weise kann die Zentrierung des Mutternkörpers im Hinblick auf den Käfig besonders genau erfolgen.

Weiter ist es besonders bevorzugt, wenn das Distanzelement aus elektrisch isolierendem Material, vorzugsweise Kunststoff hergestellt ist. In diesem Fall wirkt die erfindungsgemäße Käfigmutter zusätzlich als elektrisch isolierende Käfigmutter, was gerade in der Kfz-Herstellung besonders bevorzugt ist, da die Mutter sich dann bei Elektrophoreselackierung nicht mit Lack zusetzt, wodurch sonst, bei nicht isolierenden Muttern das Innengewinde unbrauchbar werden kann.

Eine besonders schnelle und preisgünstige Herstellung ergibt sich, wenn das Distanzelement als Kunststoffspritzgussteil hergestellt ist.

Eine besonders bevorzugte Gestaltung der Federelemente ergibt sich, wenn diese als sich in Axialrichtung des Innengewindes erstreckende dünne Bänder ausgebildet sind.

Diese Federelemente können dann vorzugsweise V-förmig geknickt ausgebildet sein, wobei die Kante des Knickes parallel zur Axialrichtung des Innengewindes verläuft. Auf diese Weise erzielt man eine besonders hohe Steifigkeit der Federelemente in Axialrichtung bei einer besonders großen Flexibilität senkrecht dazu, also in der Richtung, in der die Fertigungstoleranzen ausgeglichen werden sollen.

Weiter ist es besonders bevorzugt, wenn sich der innere Ring des Distanzelementes weiter in den Käfig hinein erstreckt, als die übrigen Teile des Distanzelementes. Auf diese Weise kann der innere Ring gleichzeitig als Distanzelement in Axialrichtung wirken, und damit auch in Axialrichtung einen Kontakt zwischen dem Flansch am Mutternkörper und dem Käfig vermeiden. Dadurch werden einerseits ein elektrischer Kontakt und andererseits ein Verkleben des Mutternkörpers im Käfig bei der Lackierung verhindert.

Des Weiteren ist es besonders bevorzugt, wenn der innere Ring mit vorzugsweise drei, über den Umfang des hohlzylindrischen Ansatzes gleich verteilten Verstemmungen an dem Ansatz befestigt ist. Auf diese Weise kann mit einem minimalen Aufwand an Bauteilen (lediglich drei Einzelteile) eine vollständige Verliersicherung der Käfigmutter vor der Montage erzielt werden.

Um zu verhindern, dass die Mutter zerfällt, wenn die Federelemente beispielsweise beim Transport überlastet worden sind, und brechen, kann zwischen dem inneren Ring und den Verstemmungen eine Sicherungsscheibe angebracht sein, die einen größeren Außendurchmesser aufweist, als der äußere Durchmesser des äußeren Ringes.

### Kurze Beschreibung der Abbildungen der Zeichnungen

Die vorliegende Erfindung wird im Folgenden anhand des in den Zeichnungen dargestellten Ausführungsbeispieles näher erläutert. Es zeigt:
Fig. 1 eine erfindungsgemäße Käfigmutter von oben;
Fig. 2 ein erfindungsgemäßes Distanzelement in räumlicher Darstellung;
Fig. 3 das Distanzelement der Fig. 2 von der Seite;
Fig. 4 und 5 die seitliche Auslenkung bei der erfindungsgemäßen Käfigmutter; und
Fig. 6 und 7 die Auslenkung nach oben und unten bei der erfindungsgemäßen Käfigmutter.

### Bester Weg zur Ausführung der Erfindung

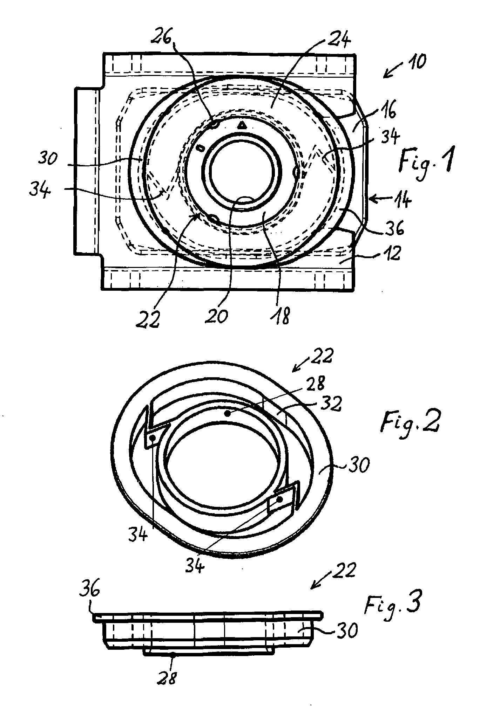

Figur 1 zeigt eine erfindungsgemäße Käfigmutter 10 von vorne, das heißt, aus der Richtung gesehen, in die üblicherweise der Schraubenbolzen in die Käfigmutter 10 eingeschraubt wird.

Nicht direkt sichtbare Bestandteile der Käfigmutter 10 sind dabei gestrichelt dargestellt.

Wie üblich umfasst die Mutter einen rechteckigen Käfig 12, der mit dem Bauteil, an die erfindungsgemäße Käfigmutter 10 angebracht werden soll, verschweißt werden kann. Vorne weist der Käfig 12 eine im Wesentlichen kreisrunde Öffnung auf, die an einer Seite, nämlich an der Seite, an der später ein Mutternkörper 14 eingeschoben werden kann, zur Seite hin aufgebrochen ist. Der Mutternkörper 14 weist dabei einen verbreiterten Flansch 16 als Halteelement und einen hohlzylindrischen Ansatz 18 mit einem Innengewinde 20 auf. Der hohlzylindrische Ansatz 18 erstreckt sich dabei mit seiner

Axialrichtung in Blickrichtung der Figur 1, das heißt, in der Richtung, in der ein Schraubenbolzen in die erfindungsgemäße Käfigmutter eingeschraubt werden kann. Der Flansch 16 erstreckt sich senkrecht zu dieser Richtung und weist die Form eines Rechtseckes mit abgeschrägten Ecken auf. Erfindungsgemäß ist auf dem hohlzylindrischen Ansatz ein Distanzelement 22 dergestalt aufgesteckt, dass es sich ebenfalls innerhalb der Öffnung des Käfigs 12 befindet. Das Distanzelement 22 wird im Folgenden anhand der Figuren 2 und 3 näher erläutert. In Figur 1 ist demgegenüber ersichtlich, wie das Distanzelement 22 zwischen dem hohlzylindrischen Ansatz 18 des Flansches 16 in der Öffnung des Käfigs 12 eingesetzt ist. Um den Mutternkörper 14 in dem Käfig 12 zu sichern, ist außerhalb des Käfigs 12 eine Sicherungsscheibe 24 angebracht, die den hohlzylindrischen Ansatz 18 des Mutternkörpers 14 umschließt und dort durch drei gleich beabstandete Verstemmungen 26 fixiert ist. Der Außendurchmesser der Sicherungsscheibe 24 ist dabei zumindest etwas größer als der Durchmesser der Öffnung in dem Käfig 12. Erfindungsgemäß besteht aber auch die Möglichkeit, dass der Mutternkörper 14 ausschließlich durch das Distanzelement 22 in dem Käfig 12 gehalten ist. Bei einer solchen Konstruktion wird dann das Distanzelement selbst direkt durch die Verstemmungen 26 an dem hohlzylindrischen Ansatz 18 des Mutternkörpers 14 festgehalten.

Das Distanzelement 22 stützt sich dabei an den Innenwänden des Käfigs 12 ab. Es wird im Folgenden anhand der Figuren 2 und 3 näher beschrieben.

Figur 2 zeigt das Distanzelement 22, welches in der vorliegenden Ausführungsform als Kunststoff-Spritzgussteil ausgeführt ist. Es umfasst einen inneren Ring 28 und einen von diesem beabstandet aber koaxial angeordneten äußeren Ring 30. Der äußere Ring 30 ist dabei schon bei der Fertigung an die Form der Öffnung angepasst, hier indem er an zwei einander gegenüberliegenden Seiten abgeplattet ausgebildet ist.

Der innere Ring 28 und der äußere Ring 30 des Distanzelementes 22 sind durch zwei Federelemente 34 elastisch miteinander verbunden. Alternativ kann auch eine andere Anzahl von Federelementen zum Beispiel 3 oder 4, oder sogar nur ein Federelement vorgesehen sein.

Hier sind die Federelemente 34 so angeordnet, dass sie den inneren und den äußeren Distanzring 28 und 30 genau zwischen den Abplattungen 32 verbinden. Auf diese Weise steht besonders viel Spielraum für die Federelemente 34 zur Verfugung.

Erfindungsgemäß sind hier die Federelemente 34 einstückig mit den beiden Ringen 28 und 30 des Distanzelementes 22 im Spritzgussverfahren hergestellt. Die Federelemente 34 weisen dabei die Form V-förmig geknickter Bänder auf, wobei der Knick parallel zur Axialrichtung des Innengewindes 20 verläuft. Auf diese Weise verfügen die Federelemente 34 über eine besonders große Elastizität senkrecht zu der Axialrichtung des Innengewindes 20 und über eine besonders große Stabilität in Axialrichtung.

Der innere Ring 28 ist als zu dem hohlzylindrischen Ansatz 18 koaxialer kurzer Hohlzylinder ausgebildet. Er erstreckt sich in Figur 2 und 3 weiter in den Käfig 12 hinein als die übrigen Teile des Distanzelementes 22. Auf diese Weise dient der innere Ring 28 gleichzeitig als Distanzhalter in Axialrichtung, der verhindert, dass der Flansch 16 in Berührung und/oder in elektrischem Kontakt mit dem Käfig 12 kommt. Auf diese Weise stellt die erfindungsgemäße Käfigmutter 10 gleichzeitig eine elektrisch isolierende Käfigmutter dar, was große Vorteile beispielsweise bei der Elektrophoreselackierung von bereits mit diesen Käfigmuttern versehenen Bauteilen bietet. Des weiteren ist so sichergestellt, dass immer ein ausreichender Spalt zwischen dem Flansch 16 und dem Käfig 12 vorliegt, sodass diese beiden Bauteile nicht durch das Einsaugen von Lack aufgrund von Kapillarwirkung zusammenkleben können.

Figur 3 zeigt weiter deutlich, dass der äußere Ring 30 des Distanzelementes 22 einen sich nach außen erstreckenden Rand 36 an seinen der Einschraubseite der Käfigmutter 10 zugewandten Ende aufweist. Mit diesem Rand 36 stützt sich das Distanzelement 22 auf der Außenseite der Vorderwand des Käfigs 12 ab.

Besonders bevorzugt ist eine Anordnung der Federelemente 34, bei der das eine Federelement 34 in Figur 1 mit der Kante nach oben und das andere mit der Kante nach unten zeigt.

Käfig 12 und Mutternkörper 14 sind dabei vorzugsweise aus Stahl hergestellt. Es kann jedoch auch jedes andere Metall, und auch ein nicht metallischer Werkstoff Verwendung finden. Um die elektrische Isolation zwischen Käfig 12 und Mutternkörper 14 aufrechtzuerhalten, ist die Sicherungsscheibe 24 vorzugsweise aus einem elektrisch isolierenden Material, insbesondere Kunststoff hergestellt. Dabei empfiehlt sich eine Herstellung ebenfalls als Kunststoffspritzgießteil.

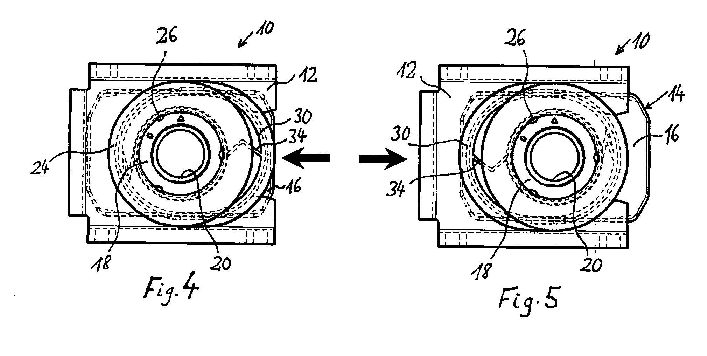

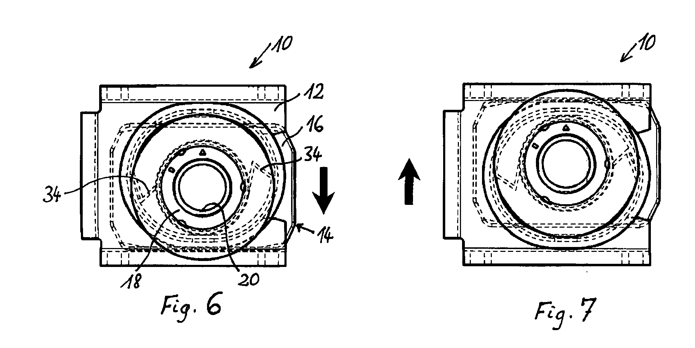

Die Figuren 4, 5, 6 und 7 zeigen die verschiedenen Auslenkungen der erfindungsgemäßen Käfigmutter zum Ausgleich bestehender Fertigungstoleranzen. In diesen Figuren wird sehr schön kenntlich, wie die Federelemente 34 jeweils ausgelenkt werden.

Der Zusammenbau der Käfigmutter 10 erfolgt dergestalt, dass zuerst das Distanzelement 22 von vorne in die Öffnung des Käfigs 12 eingesetzt wird, und dann der Mutternkörper 14 von hinten in den Käfig 12 eingeschoben wird, wobei gleichzeitig der hohlzylindrische Ansatz 18 in den inneren Ring 28 geschoben wird. Das Distanzelement 22 sitzt dann in der Öffnung des Käfigs 12, wobei sich der Rand 36 außen auf der Vorderwand des Käfigs 12 abstützt. Zusätzlich kann dann die Sicherungsscheibe 24 auf den hohlzylindrischen Ansatz 18 aufgesteckt werden.

Mit dem Verstemmen des inneren Ringes 28 des Distanzelements 22 beziehungsweise der Sicherungsscheibe 24 an dem Ansatz 18 ist die Montage dann beendet.

## Patentansprüche

1. Käfigmutter (10) mit einem Käfig (12) mit einer Öffnung und einem in dem Käfig (12) beweglich aufgenommenen Mutternkörper (14) mit einem verbreiterten Flansch (16) und einem hohlzylindrischen Ansatz (18) mit einem Innengewinde (20),
**dadurch gekennzeichnet**, **dass**
zwischen dem Mutternkörper (14) und dem Käfig (12) ein Distanzelement (22) angeordnet ist, welches mindestens ein senkrecht zu der Axialrichtung des Innengewindes (20) wirksames Federelement (34) umfasst, und der Mutternkörper (14) gegenüber dem Käfig (12) gegen die Federkraft des Federelements (34) beweglich ist.

2. Käfigmutter (10) nach Anspruch 1, **dadurch gekennzeichnet**, **dass** mindestens zwei einander gegenüberliegende Federelemente (34) vorgesehen sind.

3. Käfigmutter (10) nach einem der Ansprüche 1 oder 2, **dadurch gekennzeichnet**, **dass** die Federelemente (34) in Axialrichtung des Innengewindes (20) erheblich steifer ausgebildet sind, als senkrecht zu der Axialrichtung.

4. Käfigmutter (10) nach einem der Ansprüche 1, 2 oder **3,dadurch gekennzeichnet**, **dass** das Distanzelement (22) zwei koaxial ineinander angeordnete Ringe (28, 30) umfasst, die durch das oder die Federelemente (34) verbunden sind, wobei der innere Ring (28) den hohlzylindrischen Ansatz (18) des Mutternkörpers (14) umschließt und der äußere Ring (30) sich an dem Käfig (12) abstützt.

5. Käfigmutter (10) nach einem der Ansprüche 1, 2, 3 oder 4, **dadurch gekennzeichnet**, **dass** das Distanzelement (22) aus elektrisch isolierendem Material, vorzugsweise Kunststoff hergestellt ist.

6. Käfigmutter (10) nach Anspruch **5,dadurch gekennzeichnet**, **dass** das Distanzelement (22) als Kunststoffspritzgussteil hergestellt ist.

7. Käfigmutter (10) nach einem der Ansprüche 1 bis 6, **dadurch gekennzeichnet**, **dass** die Federelemente (34) als sich in Axialrichtung des Innengewindes (20) erstreckende dünne Bänder ausgebildet sind.

8. Käfigmutter (10) nach Anspruch 7, **dadurch gekennzeichnet**, **dass** die Federelemente (34) V-förmig geknickt ausgebildet sind, wobei die Kante des Knicks parallel zur Axialrichtung des Innengewindes (20) verläuft.

9. Käfigmutter (10) nach Anspruch 4, **dadurch gekennzeichnet**, **dass** sich der innere Ring (28) des Distanzelementes (22) weiter in den Käfig (12) hinein erstreckt, als die übrigen Teile des Distanzelementes (22).

10. Käfigmutter (10) nach einem der Ansprüche 4 oder 9, **dadurch gekennzeichnet**, **dass** der innere Ring (28) mit vorzugsweise drei, über den Umfang des hohlzylindrischen Ansatzes (18) gleich verteilten Verstemmungen (26) an dem Ansatz (18) befestigt ist.

11. Käfigmutter (10) nach Anspruch 10, **dadurch gekenntzeichnet, dass** zwischen dem inneren Ring (28) und den Verstemmungen (26) eine Sicherungsscheibe (24) angebracht ist, die einen größeren Außendurchmesser aufweist, als der äußere Durchmesser des äußeren Ringes (30).

## Claims

1. Cage nut (10) comprising a cage (12) with an opening and a nut body (14) which is accommodated in movable manner in the cage (12) and comprising an enlarged flange (16) and a hollow-cylindrical shoulder (18) with an internal thread (20),
**characterised in that**
a spacer element (22) is arranged between the nut body (14) and the cage (12), which spacer element comprises at least one spring element (34) which is effective perpendicular to the axial direction of the internal thread (20), and the nut body (14) is movable with respect to the cage (12) counter to the spring force of the spring element (34).

2. Cage nut (10) according to claim 1, **characterised in that** at least two spring elements (34) which lie opposite one another are provided.

3. Cage nut (10) according to either claim 1 or claim 2, **characterised in that** the spring elements (34) are made considerably more rigid in the axial direction of the internal thread (20) than perpendicular to the axial direction.

4. Cage nut (10) according to any of claims 1, 2 or 3, **characterised in that** the spacer element (22) comprises two rings (28, 30) arranged coaxially one within the other, which are connected by the spring element or elements (34), the inner ring (28) surrounding the hollow-cylindrical shoulder (18) of the nut body (14) and the outer ring (30) being supported on the cage (12).

5. Cage nut (10) according to any of claims 1, 2, 3 or 4, **characterised in that** the spacer element (22) is made from electrically insulating material, preferably plastics material.

6. Cage nut (10) according to claim 5, **characterised in that** the spacer element (22) is produced as an injection-moulded plastics part.

7. Cage nut (10) according to any of claims 1 to 6, **characterised in that** the spring elements (34) are formed as thin strips extending in the axial direction of the internal thread (20).

8. Cage nut (10) according to claim 7, **characterised in that** the spring elements (34) are formed bent in a V-shape, the edge of the bend running parallel to the axial direction of the internal thread (20).

9. Cage nut (10) according to claim 4, **characterised in that** the inner ring (28) of the spacer element (22) extends further into the cage (12) than the other parts of the spacer element (22).

10. Cage nut (10) according to either claim 4 or claim 9, **characterised in that** the inner ring (28) is fastened to the shoulder (18) with preferably three punch marks (26) which are distributed equally over the periphery of the hollow-cylindrical shoulder (18).

11. Cage nut (10) according to claim 10, **characterised in that** a locking washer (24) is provided between the inner ring (28) and the punch marks (26), which washer has a greater external diameter than the external diameter of the outer ring (30).

## Revendications

1. Ecrou à cage (10) comprenant une cage (12) avec une ouverture et un corps d'écrou (14) reçu mobile dans la cage (12), comprenant une bride élargie (16) et une pièce ajoutée cylindrique creuse (18) avec un filet interne (20),
**caractérisé en ce que** :
entre le corps d'écrou (14) et la cage (12) se trouve un élément d'écartement (22) qui comprend au moins un élément élastique (34) agissant perpendiculairement à la direction axiale du filet interne (20) et le corps d'écrou (14) est mobile vis-à-vis de la cage (12) à l'encontre de la force élastique de l'élément élastique (34).

2. Ecrou à cage (10) selon la revendication 1, **caractérisé en ce qu'**il est prévu au moins deux éléments élastiques (34) en regard l'un de l'autre.

3. Ecrou à cage (10) selon l'une quelconque des revendications 1 ou 2, **caractérisé en ce que** les éléments élastiques (34) sont conçus de manière considérablement plus rigide dans direction axiale du filet interne (20) que perpendiculairement à la direction axiale.

4. Ecrou à cage (10) selon l'une quelconque des revendications 1, 2 ou 3, **caractérisé en ce que** l'élément d'écartement (22) comprend deux bagues (28, 30) aménagées coaxialement l'une dans l'autre, lesquelles bagues sont reliées par le ou les éléments élastiques (34), dans lequel la bague interne (28) enserre la pièce rapportée cylindrique creuse (18) du corps d'écrou (14) et la bague externe (30) s'appuie sur la cage (12).

5. Ecrou à cage (10) selon l'une quelconque des revendications 1, 2, 3 ou 4, **caractérisé en ce que** l'élément d'écartement (22) est fabriqué en matériau isolant de l'électricité, de préférence un matériau synthétique.

6. Ecrou à cage (10) selon la revendication 5, **caractérisé en ce que** l'élément d'écartement (22) est formé d'une pièce moulée par injection en matériau synthétique.

7. Ecrou à cage (10) selon l'une quelconque des revendications 1 à 6, **caractérisé en ce que** les éléments élastiques (34) se présentent sous la forme de rubans minces s'étendant dans la direction axiale du filet interne (20).

8. Ecrou à cage (10) selon la revendication 7, **caractérisé en ce que** les éléments élastiques (34) se présentent sous une forme repliée en V, dans lequel l'arête du repli s'étend parallèlement à la direction axiale du filet interne (20).

9. Ecrou à cage (10) selon la revendication 4, **caractérisé en ce que** la bague interne (28) de l'élément d'écartement (22) s'étend plus loin à l'intérieur de la cage (12) que les parties restantes de l'élément d'écartement (22).

10. Ecrou à cage (10) selon l'une quelconque des revendications 4 ou 9, **caractérisé en ce que** la bague interne (28) est fixée sur la pièce rapportée (18) avec de préférence trois matages (26) également répartis sur la périphérie de la pièce rapportée cylindrique creuse (18).

11. Ecrou à cage (10) selon la revendication 10, **caractérisé en ce qu'**il y a entre la bague interne (28) et les matages (26) une rondelle d'arrêt (24) qui présente un plus grand diamètre externe que le diamètre externe de la bague externe (30).
